Europäisches Patentamt

(19) European Patent Office  (11) Publication number: **0 018 812**
Office européen des brevets  **B1**

(12) **EUROPEAN PATENT SPECIFICATION**

(45) Date of publication of patent specification: **11.07.84**  (51) Int. Cl.³: **A 47 C 9/00** //B60N1/00, B63B29/04, B61D33/00

(21) Application number: **80301394.5**

(22) Date of filing: **28.04.80**

(54) **Sitting device.**

(30) Priority: **30.04.79 NO 791446**

(43) Date of publication of application:
**12.11.80 Bulletin 80/23**

(45) Publication of the grant of the patent:
**11.07.84 Bulletin 84/28**

(84) Designated Contracting States:
**AT BE CH DE FR GB IT LI LU NL SE**

(56) References cited:
**CA - A - 961 755**
**DE - A - 2 334 400**
**DE - C - 424 400**
**GB - A - 1 559 677**

(73) Proprietor: **Mengshoel, Hans Christian**
**Bygdoey allé 12**
**N-Oslo 2 (NO)**

(73) Proprietor: **Gusrud, Svein A.**
**Tokerudberget 18**
**N-Oslo 9 (NO)**

(72) Inventor: **Mengshoel, Hans Christian**
**Bygdoey allé 12**
**N-Oslo 2 (NO)**
Inventor: **Gusrud, Svein A.**
**Tokerudberget 18**
**N-Oslo 9 (NO)**

(74) Representative: **Barlow, Roy James et al,**
**J.A.KEMP & CO. 14, South Square Gray's Inn**
**London WC1R 5EU (GB)**

Courier Press, Leamington Spa, England.

## Description

The present invention relates to sitting devices to be freely positioned on or fixedly mounted on a floor, or to be attached to vertical surfaces.

For a number of applications of sitting devices it is frequently impractical to use traditional chairs, both with respect to floor cleaning and with respect to achieving a suitable sitting posture, e.g. in a work situation. There are a number of known sitting devices which are fixedly attached to the floor, and such sitting devices are in particular found on ships, trains or steerable land vehicles such as passenger cars. It is further known from such transportation means to have foldable, e.g. tip-up, seats attached to a wall.

DE—C—424400 discloses a sitting device in accordance with the pre-characterising part of claim 1. In the cited device the occupant's feet can be supported by a foot rail under that seat which is in front of the occupant.

The present invention therefore aims at solving problems of the known sitting devices.

Accordingly the present invention provides the features set out in the characterising portion of claim 1.

In order tht the invention may more readily be understood the following description will now be given merely by way of example, with reference to the drawings, in which:—

Figure 1 depicts one form of sitting device attached to a vertical wall surface;

Figure 2 is a perspective view showing the sitting devices of Figure 1;

Figure 3 depicts sitting devices according to the invention attached to a vertical wall surface, where the distance from a seat to the shin cushion in front is greater than that shown in the arrangement of Figures 1 and 2;

Figure 4 is a perspective view of the devices according to Figure 3;

Figure 5 depicts sitting devices according to the invention attached to a floor;

Figure 6 is a perspective view of the embodiment of Figure 5;

Figure 7 depicts sitting devices attached to a floor in an arrangement where the distance from seat to shin cushion in front is greater than in Figures 5 and 6; and

Figure 8 is a perspective view of the devices of Figure 7.

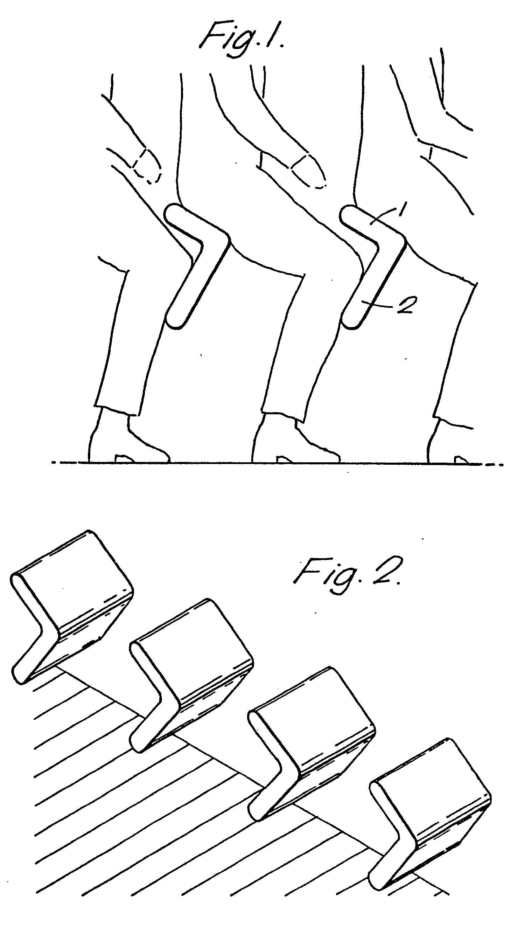

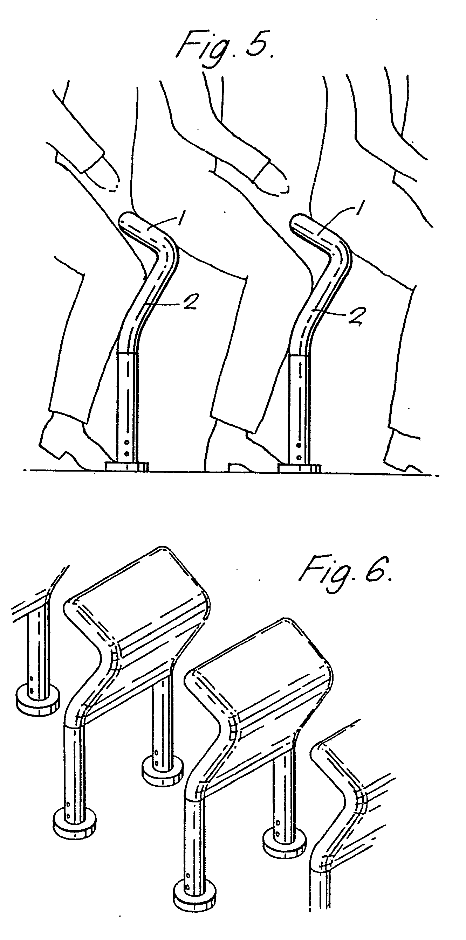

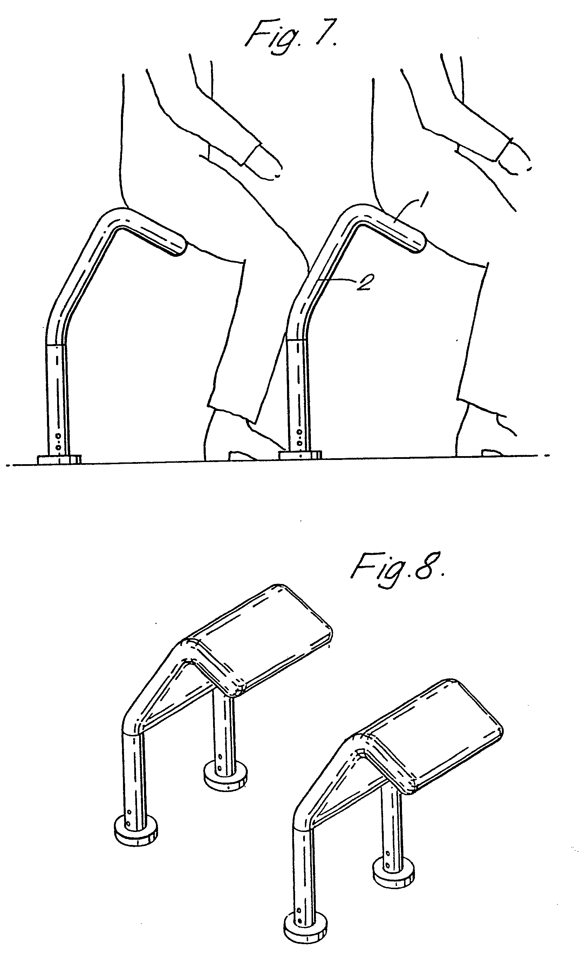

The present invention may find particular application as seats for example as grandstand seating, in public transport vehicles, or in meeting rooms. The sitting devices as shown in Figures 1 to 8 consist of a shin support member 2, in this case an upholstered member, and a downwardly inclined seat member 1. The members 1 and 2 are in the form of limbs of an upholstered member or sitting unit of L-shaped cross section with the included angle within the L being 90° or more. The rather forwardly inclined seat member 1 enables the trunk of the occupant to be held with a natural balanced posture (almost like standing) without the use of a support at the lumbar region and with a minimum use of muscular force. The posture prevents slipping at the lumbar region, and the shin support member of the sitting unit in front inhibits forward sliding down the seat member 1 and distributes part of the body weight from the seat member 1 to the shin support 2. By the term sitting device used throughout this specification, it is intended to denote a seat member/shin support member combination such as the seat member 1 of one sitting unit and the shin support member of the next L-shaped sitting unit shown in Figures 1 to 8.

By placing identical sitting units in an array after one another there is achieved the required sitting posture in that the shin cushion or shin support member 2 of one sitting unit, 1, 2 is used together with the seat cushion or member 1 on the sitting unit behind; see Figures 1, 3, 5 and 7.

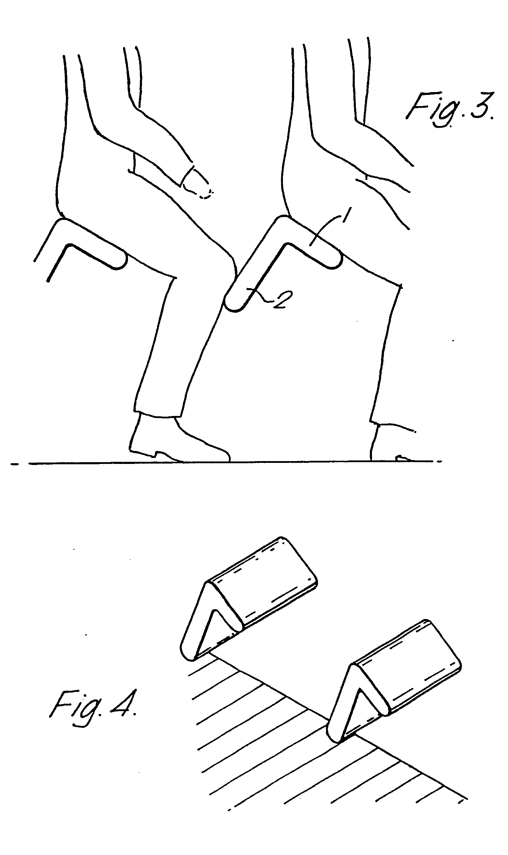

The embodiments of the invention shown in Figures 1 to 8 thus provide an approximately standing-sitting posture with obtuse angles between on the one hand the trunk and thigh and between on the other hand the thigh and the shin, respectively. As will appear from Figures 3, 4 and 7, 8 one may, by shifting the shin support member 2 of each sitting unit rearwardly, easily alter the mutual distance between the sitting units. Fixed sitting units, attached for example to a wall, will ease the cleaning of the floor compared with sitting equipment which is free standing on a floor.

By positioning the sitting units in an array after one another, such that the user assumes an approximately standing-sitting posture, the sitting device of this invention can provide possibility for substantially more sitting people per square metre than with existing traditional sitting equipment in the previously mentioned fields of use.

Due to the approximately standing-sitting posture with obtuse angles between the trunk and the thigh and between the thigh and the shin, less muscular force will be required in order to sit down on and to rise from the sitting units as compared with existing sitting equipment having a lower sitting level. The ease of access to the sitting unit is also an important advantage.

Used in connection with grandstand-seating, such sitting unit may prevent avalanche effects, i.e. that in the event of the rearmost rows of spectators falling forward they do not cause the rows of spectators in front to be involved in the fall.

The illustrated devices are easy to enter and to leave.

## Claims

1. A sitting device for use by at least two occupants sitting one behind another, the device consisting of at least two identical integral units (1, 2) supported in spaced apart positions fixed relative to each other each unit presenting a pair of supporting surfaces of which one supporting surface (1) forms a posterior support for a first occupant, characterised in that the second supporting surface (2) of the same unit forms a shin support for a second occupant seated on the other said integral unit (1, 2) disposed behind the first occupant.

2. A device according to claim 1, characterized in that the supporting faces (1, 2) are upholstered.

3. A device according to claim 1 or 2, characterized in that said unit comprises a forwardly inclined seat cushion (1) and a shin cushion (2) which together form a mutual angle of at least 90°.

4. A device according to claim 1, 2 or 3, characterized in that each unit is wall-mounted.

**Patentansprüche**

1. Sitzvorrichtung für wenigstens zwei hintereinander sitzende Benutzer, wobei die Vorrichtung aus wenigstens zwei identischen einstückigen Einheiten (1, 2) besteht, die in getrennten Lagen fest relativ zueinander gehalten sind und von denen jede Einheit zwei Stützflächen hat, von denen eine Stützfläche (1) eine Gesäßstütze für einen ersten Benutzer bildet, dadurch gekennzeichnet, daß die zweite Stützfläche (2) der gleichen Einheit eine Schienbeinstütze für einen zweiten Benutzer bildet, der auf der anderen einstückigen Einheit (1, 2) sitzt, die hinter dem erstem Benutzer angeordnet ist.

2. Vorrichtung nach Anspruch 1, dadurch gekennzeichnet, daß die Stützflächen (1, 2) gepolstert sind.

3. Vorrichtung nach Anspruch 1 oder 2, dadurch gekennzeichnet, daß die Einheit einen nach vorne geneigten Sitzpolster (1) und einen Schienbeinpolster (2) aufweist, die zusammen einen gemeinsamen Winkel von wenigstens 90° bilden.

4. Vorrichtung nach Anspruch 1, 2 oder 3, dadurch gekennzeichnet, daß jede Einheit an einer Wand angeordnet ist.

**Revendications**

1. Siège destiné à être utilisé par au moins deux occupants assis l'un derrière l'autre, et comprenant au moins deux éléments d'un seul tenant, identiques, (1, 2) supportés dans des positions espacées, et fixes l'un par rapport à l'autre, chaque élément présentant une paire de surfaces de support dont l'une (1) constitue un support postérieur pour un premier occupant, caractérisé par le fait que la seconde surface de support (2) constitue un support pour le devant des jambes d'un second occupant assis sur l'autre élément d'un seul tenant (1, 2) disposé derrière le premier occupant.

2. Siège selon la revendication 1, caractérisé par le fait que les surfaces de support (1, 2) sont rembourrées.

3. Siège selon la revendication 1 ou 2, caractérisé par le fait que ledit élément comprend un coussin de siège (1) incliné vers l'avant et un coussin de devant de jambes (2) qui forment l'un par rapport à l'autre un angle d'au moins 90°.

4. Siège selon la revendication 1, 2 ou 3, caractérisé par le fait que chaque élément est monté sur une paroi.

Fig.1.

Fig.2.

Fig. 3.

Fig. 4.

Fig. 5.

Fig. 6.

Fig. 7.

Fig.8.

4